# EUROPEAN PATENT APPLICATION

(11) **EP 1 914 440 A1**
(43) Date of publication of application: **23.04.2008**
(21) Application number: 06782193.4
(22) Date of filing: 02.08.2006
(51) Int. Cl.: F16F 1/36, F16F 3/04

(54) **METHOD OF MANUFACTURING RESIN COILED SPRING AND RESIN COILED SPRING**

(30) Priority: 10.08.2005 JP 2005232548
(71) Applicant: Olympus Corporation, Tokyo 151-0072 (JP)
(72) Inventor: OHASHI, Naoki, Sunto-gun, Shizuoka 411-0907 (JP); KOBAYASHI, Kiyoaki, Fuji-shi, Shizuoka 419-0201 (JP)
(74) Representative: von Hellfeld, Axel
(86) International application number: PCT/JP2006/315324
(87) International publication number: WO 2007/018099

(57) **Abstract**

A method of manufacturing a resin coil spring including integrally molding a spring unit (2) from synthetic resin, the spring unit (2) including a coil unit (2a) having plural coil members (2c) and ring-like supports (2b) respectively arranged on two sides of the coil unit and connected to an end of each of the plural coil members, and stacking the molded plural spring units (2) one on another, and a resin coil spring (1) including plural spring units (2) each integrally molded from synthetic resin and stacked one on another, the spring unit including a coil unit (2a) having plural coil members (2c) and ring-like supports (2b) respectively arranged on two sides of the coil unit and connected to an end of each of the plural coil members.

## Description

### TECHNICAL FIELD

The present invention relates to a resin coil spring and a method of manufacturing the resin coil spring.

### BACKGROUND ART

Conventionally, a reagent container employed in an automated analyzer includes a metallic compression spring in a cap. A used reagent container must be disposed as medical waste. However, when a main body of the reagent container is made of synthetic resin, the reagent container cannot be disposed as it is unless the metallic compression spring is removed. One way to solve this problem is to use a resin spring which is used in a liquid-filling pump with a push-down head and the like instead of the metallic compression spring (see, for example Patent Document 1).

Patent Document 1: Japanese Patent Application Laid-Open No. H10-73138

### DISCLOSURE OF INVENTION

### PROBLEM TO BE SOLVED BY THE INVENTION

However, a coil spring made of synthetic resin described in Patent Document 1 is an integrally-molded piece. Therefore, a metal mold must be prepared for each spring of a particular size, such as diameter and length, which makes the coil spring expensive.

The present invention is made in view of the above, and an object of the present invention is to provide a resin coil spring and a method of manufacturing the resin coil spring which can be adapted to manufacture of springs of different lengths and the same diameter, and which can provide resin coil springs of different lengths at low cost.

### MEANS FOR SOLVING PROBLEM

To solve the problem as described above and to achieve an object, one embodiment of a method of manufacturing a resin coil spring according to the present invention includes integrally molding a spring unit from synthetic resin, the spring unit including a coil unit having plural coil members, and ring-like supports respectively arranged on two sides of the coil unit and connected to an end of each of the plural coil members, and stacking the molded spring units one on another.

Further, to solve the problem as described above and to achieve an object, one embodiment of a resin coil spring according to the present invention includes plural spring units each integrally molded from synthetic resin and stacked one on another, and the spring unit includes a coil unit having plural coil members, and ring-like supports respectively arranged on two sides of the coil unit and connected to an end of each of the plural coil members.

Further, in one embodiment of the resin coil spring according to the present invention as described above, a direction of winding of each coil member is same in each spring unit of the plural spring units.

Further, in one embodiment of the resin coil spring according to the present invention as described above, a direction of winding of the coil members of each of the spring units is different from a direction of winding of the coil members of an adjacent one of the spring units.

Further, in one embodiment of the resin coil spring according to the present invention as described above, when the plural spring units are odd in number, a pitch angle of each of the plural coil members is set equal to or narrower than 20° in one of the spring units having one direction of winding and outnumbering the spring units having a different direction of winding.

Further, in one embodiment of the resin coil spring according to the present invention as described above, in each of the spring units, ends of the plural coil members are connected to the supports at equal intervals along a circumferential direction.

### EFFECT OF THE INVENTION

Since the method of manufacturing the resin coil spring according to the present invention includes integrally molding a spring unit from synthetic resin, and stacking the molded spring units one on another, and the resin coil spring according to the present invention is manufactured from plural spring units stacked one on another, resin coil springs of different lengths and the same diameter can be easily manufactured, and resin coil springs of different lengths can be provided at low cost.

### BRIEF DESCRIPTION OF DRAWINGS

FIG. 1 is a perspective view of a resin coil spring according to a first embodiment manufactured by a method of manufacturing a resin coil spring according to the present invention;
FIG. 2 is a perspective view of a left-handed spring unit which constitutes the resin coil spring of FIG. 1;
FIG. 3 is a front view of the spring unit shown in FIG. 2;
FIG. 4 is a view for explaining a method of manufacturing the resin coil spring shown in FIG. 1 by stacking the spring units shown in FIG. 2 one on another;
FIG. 5 is a perspective view of a resin coil spring according to a second embodiment;
FIG. 6 is a perspective view of a right-handed spring unit which constitutes the resin coil spring of FIG. 5;
FIG. 7 is a front view of the spring unit shown in FIG. 6;
FIG. 8 is a view for explaining a method of manufacturing the resin coil spring shown in FIG. 5 by stacking the spring unit shown in FIG. 2 on the spring unit shown in FIG. 6;
FIG. 9 is a front view of a resin coil spring according to a third embodiment;
FIG. 10 is a perspective view of a modification of the resin coil spring; and
FIG. 11 is a front view of the resin coil spring shown in FIG. 10.

### EXPLANATIONS OF LETTERS OR NUMERALS

- 1: resin coil spring
- 2: spring unit
- 2a: coil unit
- 2b: support
- 2c: coil member
- 2d: hole
- 2e: boss
- 4: spring unit
- 4a: coil unit
- 4b: support
- 4c: coil member
- 4d: hole
- 4e: boss
- 5: resin coil spring
- 10: resin coil spring

### BEST MODE(S) FOR CARRYING OUT THE INVENTION

### First Embodiment

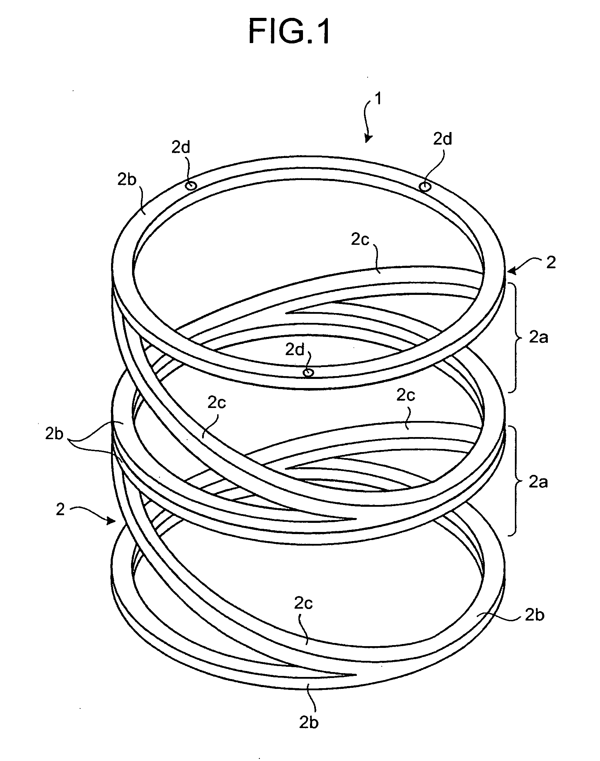

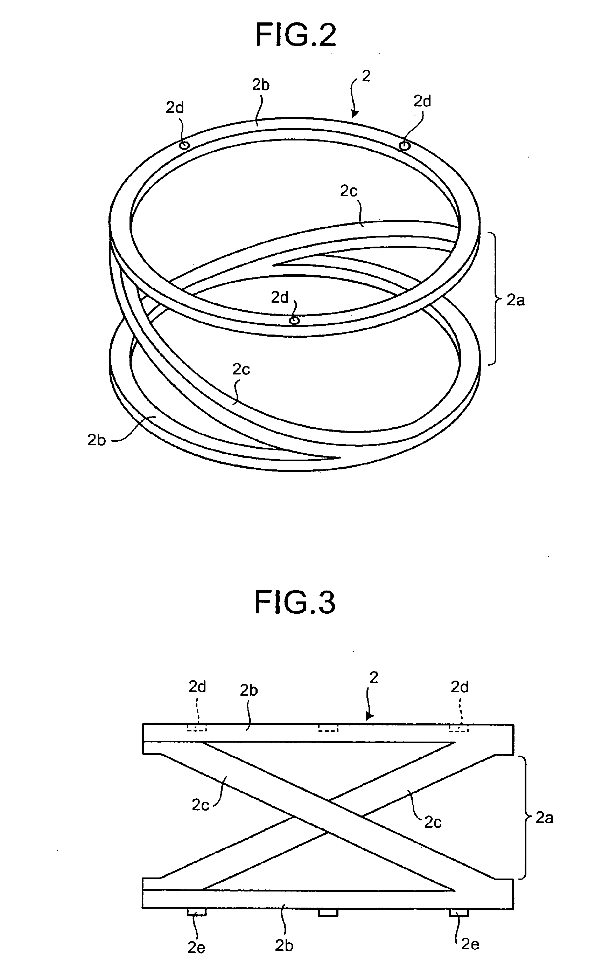

A method of manufacturing a resin coil spring and a resin coil spring according to a first embodiment of the present invention will be described in detail below with reference to the accompanying drawings. FIG. 1 is a perspective view of a resin coil spring according to the first embodiment which is manufactured by the method of manufacturing a resin coil spring according to the present invention. FIG. 2 is a perspective view of a left-handed spring unit which constitutes the resin coil spring of FIG. 1. FIG. 3 is a front view of the spring unit shown in FIG. 2.

A resin coil spring 1 includes, as shown in FIG. 1, two left-handed spring units 2 molded from synthetic resin such as polyacetal. As shown in FIGS. 2 and 3, the spring unit 2 includes a coil unit 2a, and ring-like supports 2b which are arranged on two sides of the coil unit 2a, and the spring unit 2 is integrally molded from synthetic resin. The coil unit 2a has two coil members 2c, and two ends of each coil member 2c are connected to the supports 2b arranged on two sides, respectively. Thus, two coil members 2c are supported by the supports 2b. Of two supports 2b, the upper support 2b has plural holes 2d on the upper surface, and the lower support 2b has plural bosses 2e on the lower surface so as to engage with the holes 2d. Here, in the spring unit 2, the number of turns of the coil member 2c is 1/2 turn, and two coil members 2c are connected to the supports 2b on two sides at equal intervals, with the ends of one coil member being shifted from the ends of the other coil member respectively by 180° in a circumferential direction.

Here, when the pitch angle is wider than 20° or the number of turns is larger than 1/2 turn, the spring force of the spring unit 2 can be increased. In this case, however, the coil member 2c of the spring unit 2 tends to bulge in a radially outward direction about the central axis when being compressed. When the coil member 2c bulges in this manner, an outer circumferential portion of the coil member 2c is brought into contact with a wall or the like of an object for which the spring unit 2 is employed depending on the type of the object. Then, the spring unit 2 cannot work as a spring. Or, the spring unit 2 cannot exert sufficient spring force because of the friction between the outer circumferential portion of the coil member 2c and the wall or the like. However, if the coil member 2c has an excessively narrow pitch angle and an excessively small number of turns, the spring unit 2 cannot have a required spring force.

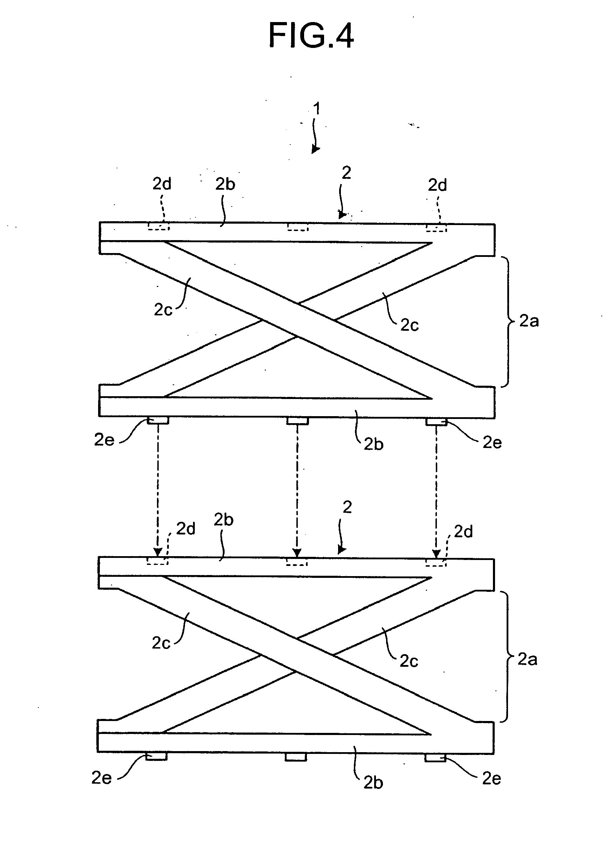

The resin coil spring 1 configured as described above is manufactured from two spring units 2 each molded integrally and stacked one on another so that the holes 2d engage with the corresponding bosses 2e respectively as shown in FIG. 4. In the resin coil spring 1, the mutually-opposed supports 2b respectively of two spring units 2 may be bonded with each other with an adhesive. Thus, the resin coil spring 1 of the present invention can be easily made into a resin coil spring of a different length when being combined with other spring units of the same diameter stacked one on another, whereby resin coil springs of different lengths can be provided at a low cost.

### Second Embodiment

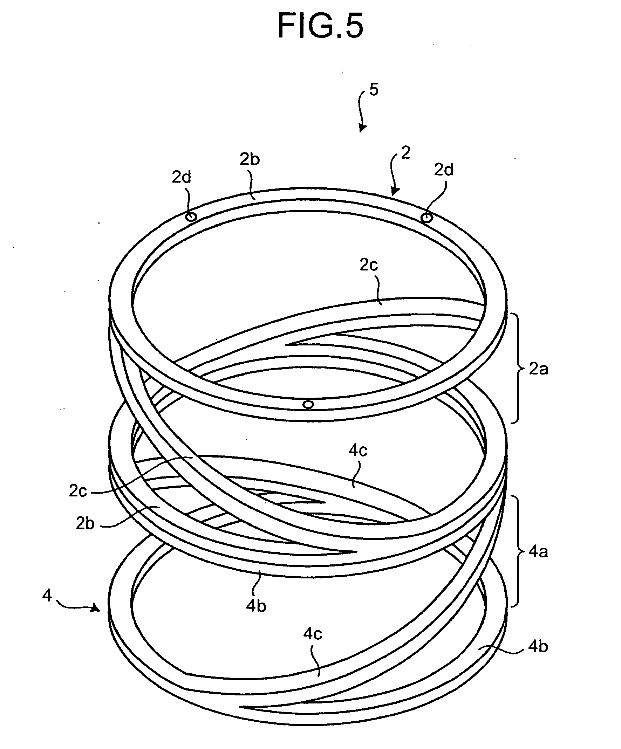

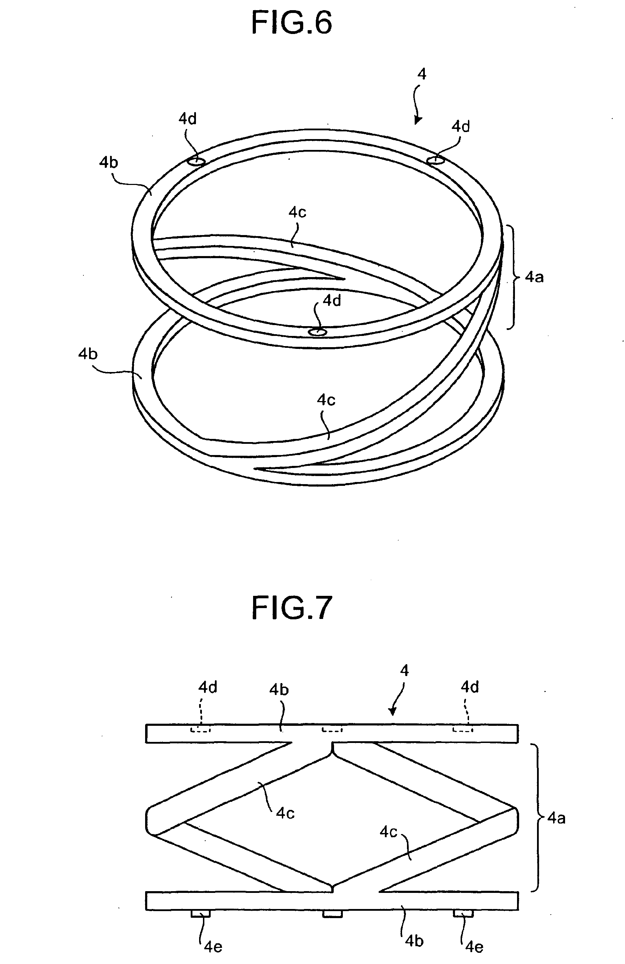

Next, a method of manufacturing a resin coil spring and a resin coil spring according to a second embodiment of the present invention will be described in detail with reference to the accompanying drawings. The resin coil spring 1 of the first embodiment is manufactured from two left-handed spring units 2 stacked one on another. On the other hand, the resin coil spring of the second embodiment is manufactured from one left-handed spring unit 2 and one right-handed spring unit placed one on another. FIG. 5 is a perspective view of a resin coil spring 5 according to the second embodiment. FIG. 6 is a perspective view of a right-handed spring unit which constitutes the resin coil spring of FIG. 5. FIG. 7 is a front view of the spring unit shown in FIG. 6. In the following description of the resin coil spring, parts corresponding to the parts of the resin coil spring 1 of the first embodiment are designated by the same reference characters.

The resin coil spring 5 includes a left-handed spring unit 2 and a right-handed spring unit 4 each integrally molded from synthetic resin such as polyacetal as shown in FIG. 5. The spring unit 4 is the same with the spring unit 2 in structure except that the direction of winding is different. As shown in FIGS. 6 and 7, the spring unit 4 includes a coil unit 4a having two coil members 4c, and ring-like supports 4b arranged on two sides of the coil unit 4a. The upper support 4b has plural holes 4d on the upper surface, whereas the lower support 4b has plural bosses 4e on the lower surface. In the spring unit 4, the holes 4d and the bosses 4e are formed in such positions that the coil member 2c shifts from the coil member 4c at the supports 2b and 4b by 90° in a circumferential direction when the boss 2e and the hole 4d, or the hole 2d and the boss 4e are engaged with each other.

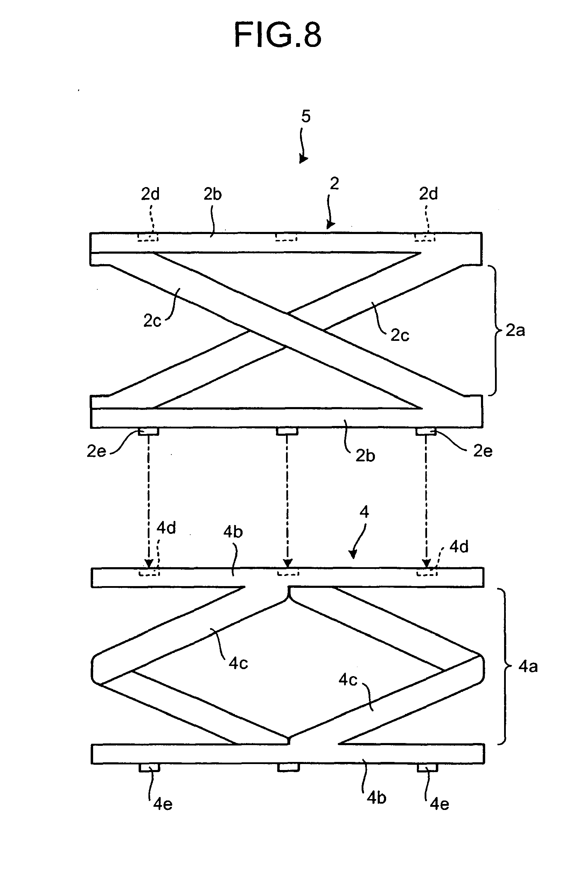

The resin coil spring 5 configured as described above is easily manufactured from the spring unit 2 and the spring unit 4 each integrally molded and placed one on another so that the bosses 2e engage with the corresponding holes 4d, as shown in FIG. 8. In the resin coil spring 5, the mutually-opposed supports 2b and 4b respectively of the spring unit 2 and the spring unit 4 may be bonded with each other with an adhesive. Further, in the resin coil spring 5, it is possible to arrange the spring unit 4 on the spring unit 2 and to make the bosses 4e engage with the corresponding holes 2d.

When the spring unit 2 or the spring unit 4 has a pitch angle exceeding 20°, and if the stress works on the spring unit 2 or 4 to cause expansion or contraction, the support 2b or the support 4b may rotate in the circumferential direction in accordance with the direction of winding of the coil members 2c or 4c. When the spring unit 2 and the spring unit 4 having different directions of winding are placed one on another and combined as in the resin coil spring 5, even if the support 2b or the support 4b rotates in the circumferential direction at the time of expansion or contraction, the rotations are in opposite directions. Therefore, the rotations of the supports 2b and 4b offset with each other. Thus, the resin coil spring 5 can prevent the friction resistance caused by the rotation of the supports 2b and 4b from negatively affecting the expansion and contraction of the coil members 2c and 4c, whereby the resin coil spring 5 can sufficiently work as a spring. Therefore, when the spring units with different directions of winding are combined in the resin coil spring of the present invention, preferably an even number of spring units are combined.

### Third Embodiment

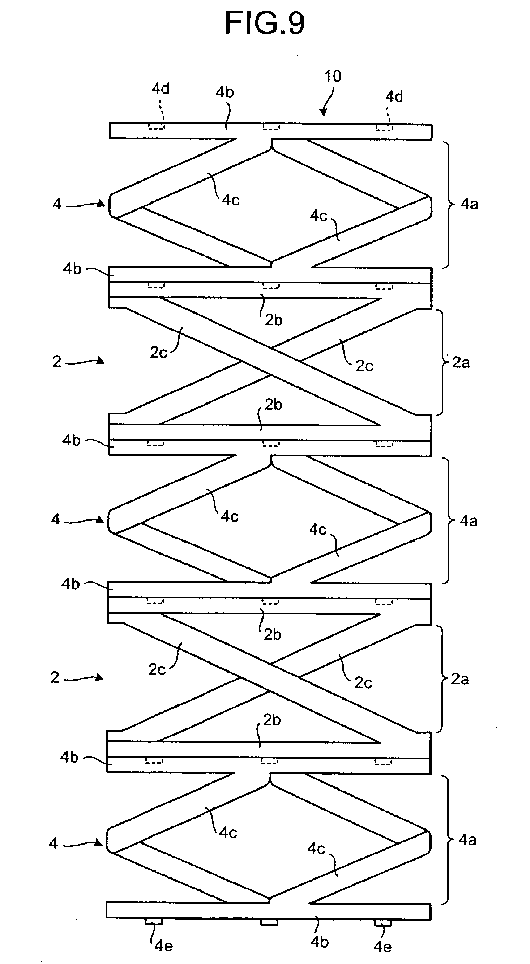

A method of manufacturing a resin coil spring and a resin coil spring according to a third embodiment of the present invention will be described in detail below with reference to the accompanying drawings. The resin coil springs 1 and 5 of the first and the second embodiments are short resin coil springs made from two spring units stacked one on another. On the other hand, the resin coil spring of the third embodiment is a long resin coil spring wherein five spring units including the left-handed spring units 2 and the right-handed spring units 4 are stacked. FIG. 9 is a front view of a resin coil spring 10 according to the third embodiment.

The resin coil spring 10 includes two left-handed spring units 2 and three right-handed spring units 4 as shown in FIG. 9. In the manufacturing of the resin coil spring 10, the spring units 2 and the spring units 4 each integrally molded are arranged so that the adjacent spring units have different directions of winding, and stacked one on another so that the bosses 2e and corresponding holes 4d or the holes 2d and the corresponding bosses 4e are engaged with each other. In the resin coil spring 10, similarly to the resin coil spring 5, the mutually-opposed supports 2b and 4b of the adjacent spring units 2 and 4 may be bonded with each other with an adhesive.

In the resin coil spring 10, when the coil members 2c and 4c of the adjacent spring units 2 and 4 have different directions of winding, and an odd number of spring units including spring units 2 and 4 are stacked one on another, the rotations of the supports 2b and 4b of the adjacent spring units 2 and 4 are offset with each other. In the resin coil spring 10 in which an odd number of spring units 2 and 4 are stacked one on another, the number of spring units 4 is larger than the number of the spring units with a different direction of winding by one. Therefore, the pitch angle of the coil member 4c of one spring unit 4 is set equal to or narrower than 20°, so as to prevent the rotation of the supports 4b of the spring unit 4. Thus, the resin coil spring 10 can prevent the rotation of the support 4b attributable to the spring units 4 whose number is larger than the other spring units by one. In the resin coil spring 10, the pitch angle of the coil members 2c and 4c of all the spring units 2 and 4 stacked one on another may be set equal to or narrower than 20°.

As is obvious from the description of the resin coil springs 1, 5, 10 of the first to the third embodiments, the method of manufacturing the resin coil spring according to the present invention includes integrally molding a spring unit from synthetic resin, and stacking a plurality of the molded spring units one on another. The resin coil spring of the present invention is manufactured from plural spring units stacked one on another. Therefore, the resin coil springs of the present invention can be manufactured from any number of spring units stacked one on another depending on the required length, as far as the diameters of the spring units are the same. Preparing two types of spring units, namely, the left-handed spring units and the right-handed spring units in advance should be sufficient. Thus, according to the method of manufacturing the resin coil spring and the resin coil spring of the present invention, it is not necessary to prepare a metal mold for each size of the resin coil spring. Therefore, a resin coil spring of a required length can be provided at low cost, and resin coil springs of various lengths can be readily manufactured.

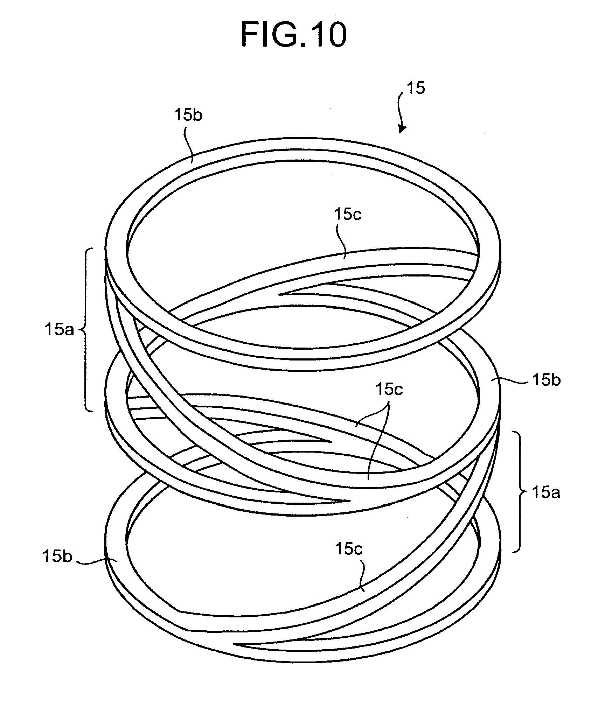

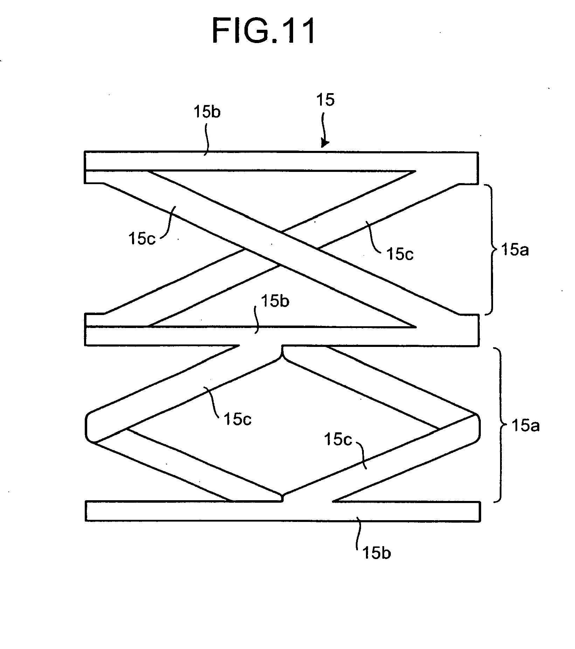

The resin coil spring of the present invention may be integrally molded from synthetic resin, and configured as a resin coil spring 15 shown in FIGS. 10 and 11, so that two coil units 15a are connected with each other via three ring-like supports 15b, and two coil members 15c respectively in adjacent coil units 15a may have opposite directions of winding, in other words, one coil member 15c may be right-handed and the other coil member 15c may be left-handed. Here, in the coil unit 15a, the number of turns of the coil member 15c is 1/2 turn, and two coil members 15c are connected to the supports 15b on two sides so that two ends of one coil member is shifted from two ends of another coil member by 180° in the circumferential direction. Further, the end of the coil member 15c of one coil unit 15a is placed 90° off from the end of the coil member 15c of the adjacent coil unit 15a on the support 15b in the circumferential direction.

### INDUSTRIAL APPLICABILITY

As can be seen from the foregoing, the method of manufacturing a resin coil spring and a resin coil spring according to the present invention can be adapted to resin coil springs of various lengths and the same diameter, and therefore, are useful for providing resin coil springs of different lengths at low cost, and in particular, are suitable for a resin coil spring used in a cap of a reagent container employed in an automated analyzer.

## Claims

1. A method of manufacturing a resin coil spring comprising:
integrally molding a spring unit from synthetic resin, the spring unit including a coil unit having plural coil members, and ring-like supports respectively arranged on two sides of the coil unit and connected to an end of each of the plural coil members; and
stacking the molded spring units one on another.

2. A resin coil spring comprising:
plural spring units each integrally molded from synthetic resin and stacked one on another, the spring unit including
a coil unit having plural coil members, and
ring-like supports respectively arranged on two sides of the coil unit and connected to an end of each of the plural coil members.

3. The resin coil spring according to claim 2, wherein
a direction of winding of each coil member is same in each spring unit of the plural spring units.

4. The resin coil spring according to claim 2, wherein
a direction of winding of the coil members of each of the spring units is different from a direction of winding of the coil members of an adjacent one of the spring units.

5. The resin coil spring according to claim 4, wherein
when the plural spring units are odd in number, a pitch angle of each of the plural coil members is set equal to or narrower than 20° in one of the spring units having one direction of winding and outnumbering the spring units having a different direction of winding.

6. The resin coil spring according to any one of claims 2 to 5, wherein
in each of the spring units, ends of the plural coil members are connected to the supports at equal intervals along a circumferential direction.
